(19) Europäisches Patentamt
European Patent Office
Office européen des brevets

(11) **EP 3 162 491 B1**

(12) **FASCICULE DE BREVET EUROPEEN**

(45) Date de publication et mention
de la délivrance du brevet:
**18.07.2018 Bulletin 2018/29**

(51) Int Cl.:
***B23K 31/12*** *(2006.01)* ***B23K 9/095*** *(2006.01)*

(21) Numéro de dépôt: **16195938.2**

(22) Date de dépôt: **27.10.2016**

(54) **PROCEDE DE SOUDAGE DE PIECES EN ACIER INOXYDABLE**

VERFAHREN ZUM SCHWEISSEN VON EDELSTAHLTEILEN

METHOD FOR WELDING STAINLESS-STEEL PARTS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.10.2015 FR 1560324**

(43) Date de publication de la demande:
**03.05.2017 Bulletin 2017/18**

(73) Titulaire: **Electricité de France
75008 Paris (FR)**

(72) Inventeurs:
• **DOROGAN, Katéryna
78290 Croissy-sur-Seine (FR)**
• **ANGLES, Jean
94000 Créteil (FR)**
• **IOOS, Bertrand
78300 Poissy (FR)**

(74) Mandataire: **Regimbeau
87 rue de Sèze
69477 Lyon Cedex 06 (FR)**

(56) Documents cités:
**EP-A2- 1 419 842 WO-A1-2010/050834**

• **Andreas Pittner: "A Contribution to the Solution
of the Inverse Heat Conduction Problem in
Welding Simulation", , 1 janvier 2012
(2012-01-01), pages 1-213, XP055292935, Berlin
ISBN: 978-3-9814634-9-1 Extrait de l'Internet:
URL:https://opus4.kobv.de/opus4-bam/files/
73/diss85_vt.pdf [extrait le 2016-08-02]**
• **Geoffray Bizouard: "Méta-modélisation : état de
l'art et application", , 3 septembre 2012
(2012-09-03), XP055293094, Extrait de l'Internet:
URL:https://www6.inra.fr/record/content/do
wnload/3159/31428/version/1/file/Rapport_M
etamodelisation.pdf [extrait le 2016-08-03]**

**Description**

DOMAINE TECHNIQUE GENERAL

La présente invention concerne un modèle de prédiction de paramètres opératoires de soudage implémenté dans un procédé de soudage de pièces en acier inoxydable (voir par exemple Andreas Pittner: "A contribution to the solution of the inverse heat conduction problem in welding simulation", thèse de doctorat, BAM (2012)), en particulier dans l'industrie nucléaire.

ETAT DE L'ART

Il est courant de souder des tubes ou autres pièces en acier inoxydable (inox) d'éléments de circuits sous pression, dont des installations nucléaires, pour lesquelles les normes de qualité requises sont très rigoureuses.
De telles soudures s'avérèrent délicates, et le meilleur procédé connu de soudage des aciers inoxydables est le procédé de soudage à l'arc électrique avec électrode de tungstène sous protection de gaz inerte du type argon ou hélium (dit TIG pour Tungstène Inerte Gaz). Dans un mode dit Automatique Orbital, la tête de soudage tourne autour de la partie à souder et forme un « cordon » annulaire d'un métal d'apport liant les bords des deux pièces à joindre.
De tels procédés sont connus de l'art antérieur (voir par exemple le document EP1419842), et apportent satisfaction.
La difficulté principale liée au caractère de la soudure d'étanchéité consiste dans l'impossibilité de contrôler la qualité du cordon à l'envers de la soudure (pour un soudage des tubes, par exemple). En effet, cet envers du cordon est à l'intérieur des pièces à souder, typiquement au niveau de la surface interne « invisible » recevant le fluide sous pression. Seuls des contrôles visuels externes peuvent être faits.

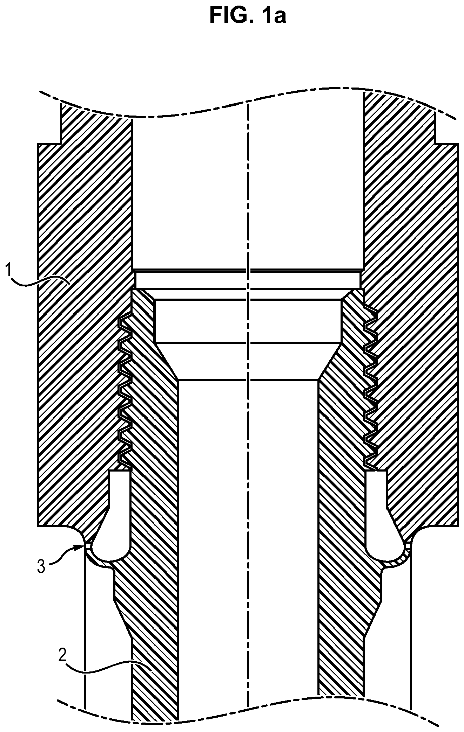

La **figure 1a** représente l'exemple du joint « Canopy » en partie haute d'un Réacteur à Eau Pressurisée (REP) d'une centrale nucléaire. Il s'agit d'une soudure assurant l'étanchéité de la liaison vissée entre deux tubes verticaux : la tête de l'adaptateur 1 du couvercle de cuve et le carter 2 de la pièce sous pression en vis-à-vis (un mécanisme de commande de grappe (MCG), un puits de thermocouple ou un bouchon). Les têtes de l'adaptateur 1 et du carter 2 sont coulées en acier inoxydable austénitique 304L. En général, les soudures des joints Canopy interviennent lors des opérations de Remplacement de Couvercle de Cuve (RCC) ou lors des remplacements ponctuels de mécanismes de commande de grappe (RMCG). On compte autour de 70 soudures de joint Canopy par couvercle de cuve pour les réacteurs des paliers 900 MW et 1300 MW. Ces soudures d'une épaisseur de 1.9 mm sont réalisées en utilisant le procédé TIG Automatique Orbital (TAO) évoqué en position verticale avec un insert métallique (un anneau fusible en acier 308L) servant de métal d'apport disposé entre les lèvres du carter 1 et de l'adaptateur 2. En service, la soudure est soumise au milieu primaire confiné côté interne et au milieu ambiant du bâtiment réacteur côté externe. Elle assure un rôle de barrière de confinement en cas de perte possible d'étanchéité de la liaison vissée.
Il n'existe pas de solution permettant de réaliser un contrôle non-destructif volumique sur ce type de soudure, outre la seule vérification de critères dimensionnels sur la forme et la position du cordon visibles coté externe. A court terme seule l'épreuve hydraulique (épreuve de surpression) peut faire desceller un défaut. Les défauts non-détectés se manifestent généralement après plusieurs cycles de fonctionnement par une perte d'étanchéité.
Dans le cas d'équipement d'installations nucléaires comme pour le joint Canopy, le premier enjeu est donc la perte de disponibilité de la tranche nucléaire au moment des épreuves hydrauliques, ces tests étant réalisés sur le chemin critique de démarrage de la tranche. Le second est le coût engendré par les réparations.
Aussi, à moyen terme, des fissures peuvent se développer par corrosion sous contraintes, ce qui peut engendrer une perte d'étanchéité.
Il reste souhaitable de disposer d'une solution beaucoup plus simple qui permette de garantir la qualité de cordons de soudures pour lesquels une face interne n'est pas visible.

PRESENTATION DE L'INVENTION

L'invention propose de pallier ces inconvénients en proposant selon un premier aspect un procédé de soudage de pièces en acier inoxydable de sorte à réaliser par fusion d'un métal d'apport à la jonction desdites pièces un cordon de soudure satisfaisant au moins un critère dimensionnel cible, caractérisé en ce qu'il comprend les étapes suivantes :

(a) Détermination par des moyens de traitement de données d'une pluralité de vecteurs de valeurs potentiellement acceptables d'au moins un paramètre opératoire de soudage en fonction de caractéristiques physico-chimiques des pièces et/ou du métal d'apport ;
(b) Pour chacun desdits vecteurs, calcul par les moyens de traitement de données d'un vecteur associé de valeurs théoriques d'au moins un paramètre dimensionnel du cordon de soudure à la jonction desdites pièces en fonction d'un modèle de bain de fusion ;

(c) Estimation par les moyens de traitement de données par krigeage d'une fonction permettant d'exprimer le ou les paramètres dimensionnels du cordon de soudure en fonction du ou des paramètres opératoires de soudage ;

(d) Détermination par les moyens de traitement de données des valeurs optimales du ou des paramètres opératoires de soudage pour lesquelles les valeurs estimées grâce à ladite fonction du ou des paramètres dimensionnelles du cordon de soudure satisfont le ou les critères dimensionnels cibles ;

(e) soudage desdites pièces par un dispositif de soudage configuré pour appliquer lesdites valeurs optimales du ou des paramètres opératoires de soudage déterminées.

Le procédé selon l'invention est avantageusement complété par les caractéristiques suivantes, prises seules ou en une quelconque de leur combinaison techniquement possible :

- le dispositif de soudage comprend une tête de soudage équipée d'une électrode générant un arc électrique entre la tête et les pièces dans une atmosphère protectrice ;
- l'électrode est en tungstène et ladite atmosphère protectrice est chimiquement inerte ;
- le métal d'apport est déposé à la jonction desdites pièces préalablement à la mise en oeuvre de l'étape (e) ;
- l'électrode est fusible et forme le métal d'apport ;
- le soudage de l'étape (e) est effectué en mode automatique orbital, c'est-à-dire avec la tête de soudage du dispositif tournant autour des pièces à souder ;
- ledit au moins un paramètre opératoire de soudage est choisi parmi :

  - Une intensité $I$ ;
  - Une tension $U$ ;
  - une vitesse de déplacement $v$ de la tête de soudage ;
  - un décentrement $h$ de la tête de soudage par rapport à l'axe de la jonction desdites pièces.

- les pièces présentent une face externe et une face interne, le cordon de soudure étant fermé ;
- les pièces sont disposées verticalement l'une par rapport à l'autre, une caractéristique physico-chimique des pièces et/ou du métal d'apport étant représentative de cette disposition verticale ;
- ledit au moins un paramètre dimensionnel du cordon de soudure est choisi parmi :

  - Une largeur haut $Eh$ sur la face externe du cordon ;
  - Une largeur bas $Eb$ sur la face externe du cordon ;
  - Une largeur haut $Ih$ sur la face interne du cordon ;
  - Une largeur bas $Ib$ sur la face interne du cordon.

- au moins une caractéristique physico-chimique des pièces et/ou du métal d'apport est choisie parmi :

  - une teneur en impuretés des pièces et/ou du métal d'apport ;
  - une épaisseur à souder.

- l'analyse de l'étape (c) est mise en oeuvre sur la base des couples d'un vecteur de valeurs potentiellement acceptables du ou des paramètres opératoires de soudage et du vecteur associé de valeurs théoriques du ou des paramètres dimensionnels du cordon de soudure ;
- le procédé comprend suite à l'étape (d) :

  - pour le vecteur de valeurs déterminées optimales du ou des paramètres opératoires de soudage, le calcul par les moyens de traitement de données du vecteur associé de valeurs théoriques d'au moins le paramètre dimensionnel du cordon de soudure en fonction dudit modèle de bain de fusion ;
  - la répétition par les moyens de traitement de données des étapes (c) et (d), de sorte à :

    ◦ ré-estimer par krigeage la fonction permettant d'exprimer le ou les paramètres dimensionnels du cordon de soudure en fonction du ou des paramètres opératoires de soudage, en prenant en outre en compte le couple du vecteur de valeurs déterminées optimales du ou des paramètres opératoires de soudage et du vecteur associé de valeurs théoriques du ou des paramètres dimensionnels du cordon de soudure ; et
    ◦ redéterminer des valeurs optimales du ou des paramètres opératoires de soudage grâce à ladite fonction réestimée.

Selon un deuxième aspect, l'invention concerne un équipement comprenant des moyens de traitement de données configurés pour mettre en oeuvre :

- Un module de détermination par d'une pluralité de vecteurs de valeurs potentiellement acceptables d'au moins un paramètre opératoire de soudage en fonction de caractéristiques physico-chimiques de pièces en acier inoxydable et/ou du métal d'apport, les pièces étant à souder par fusion du métal d'apport à la jonction desdites pièces en un cordon de soudure satisfaisant au moins un critère dimensionnel cible ;
- Un module de calcul, pour chacun desdits vecteurs, d'un vecteur de valeurs théoriques d'au moins un paramètre dimensionnel du cordon de soudure à la jonction desdites pièces en fonction d'un modèle de bain de fusion ;
- Un module d'estimation par krigeage d'une fonction permettant d'exprimer le ou les paramètres dimensionnels du cordon de soudure en fonction du ou des paramètres opératoires de soudage ;
- Un module de détermination de valeurs optimales du ou des paramètres opératoires de soudage pour lesquelles les valeurs estimées grâce à ladite fonction du ou des paramètres dimensionnelles du cordon de soudure satisfont le ou les critères dimensionnels cibles.

Selon un troisième aspect, l'invention concerne un système de soudure comprenant un équipement selon le deuxième aspect et un dispositif de soudage présentant ledit au moins un paramètre opératoire de soudage réglable.
Selon des caractéristiques avantageuses :

- le dispositif de soudage comprend une tête de soudage équipée d'une électrode générant un arc électrique entre la tête et les pièces dans une atmosphère protectrice ;
- le dispositif de soudage est de type automatique orbital ;
- le dispositif de soudage est connecté à l'équipement ;
- le dispositif de soudage est configuré pour recevoir et appliquer lesdites valeurs optimales du ou des paramètres opératoires de soudage déterminées par les moyens de traitement de données.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1a précédemment décrite est un schéma d'un joint Canopy ;
- la figure 1b représente un détail d'un joint de type Canopy pour lequel un procédé selon un mode de réalisation de l'invention est mis en oeuvre ;
- la figure 2a représente un exemple de cordon de soudure satisfaisant des critères dimensionnels cibles ;
- la figure 2b représente un exemple de cordon de soudure défectueux.

DESCRIPTION DETAILLEE

*Pièces à souder*

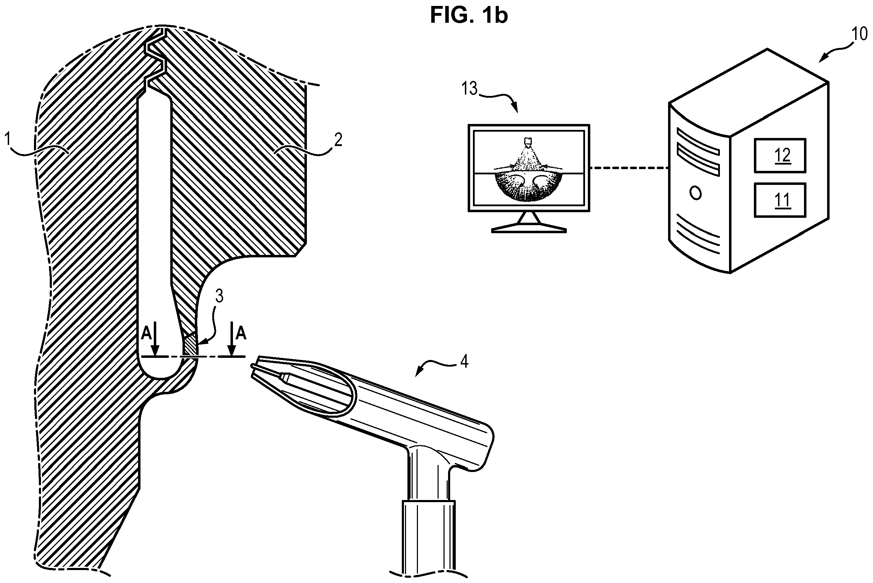

En référence à la **figure 1b,** qui représente plus en détail l'exemple du joint Canopy, est proposé un procédé de soudage de pièces 1, 2 en acier inoxydable, par exemple un acier austénitique 304L.
Les pièces 1 et 2 peuvent être de n'importe quel type et forme, et sont en particulier des pièces présentant une face interne et une face externe, en d'autres termes chaque pièce 1, 2 sépare une zone « interne » de l'extérieur, la zone interne accueillant un fluide sous pression (les pièces sont typiquement des tubes).
Dans l'exemple qui sera décrit dans la présente description, les pièces sont comme expliqué un adaptateur 1 de couvercle de cuve de réacteur nucléaire à eau pressurisée et un carter 2 de la pièce sous pression en vis-à-vis choisie parmi un mécanisme de commande de grappe (MCG), un puits de thermocouple et un bouchon.
Le présent procédé vise à réaliser par fusion d'un métal d'apport et des bords à la jonction desdites pièces 1, 2 un cordon de soudure 3.
Le cordon de soudure 3 est fermé (c'est-à-dire qu'il forme une boucle, i.e. une ligne courbe qui retourne à son point de départ) dans le cas de pièces 1, 2 séparant une zone interne de l'extérieur (pièces avec une face interne et une face externe), et même typiquement annulaire dans le cas de pièces de type tube.
Le métal d'apport est soit déjà présent (par exemple sous forme d'un insert prédisposé à la jonction des pièces 1 et 2, ayant typiquement la forme dun anneau si les pièces 1, 2 sont tubulaires), soit apporté en direct lors de la soudure, soit via une baguette, soit par une électrode fusible.
La soudure est mise en oeuvre via un dispositif de soudage 4 fournissant de l'énergie thermique pour la fusion du métal d'apport.

De façon avantageuse, l'apport thermique est obtenu via un arc électrique généré entre une tête du dispositif 4 (dite torche) et les pièces 1, 2. On parle de soudage à l'arc. Dans un mode de réalisation préférée dit TIG (tungsten inert gas), comme expliqué le dispositif 4 présente une tête de soudage équipée d'une électrode non fusible en tungstène, générant l'arc électrique dans une atmosphère protectrice en l'espèce chimiquement neutre (argon, hélium, mélange hélium hydrogène, autres gaz rares, etc.). Le gaz neutre est distribué par le dispositif 4 et soufflé vers les pièces 1, 2 de sorte à envelopper l'électrode, et éviter l'oxydation instantanée lors de la fusion du métal.

Alternativement, le dispositif de soudage 4 peut être de type MIG/MAG (metal inert/active gas). Il s'agit toujours d'un soudage à l'arc, cette fois avec une électrode fusible (fil-électrode nu qui se dévide mécaniquement) servant de métal d'apport, dans une atmosphère protectrice soit chimiquement inerte (toujours argon ou hélium) ou chimiquement active (typiquement $CO_2$ ou un mélange argon $CO_2$).

Alternativement à l'arc électrique, le dispositif 4 peut apporter l'énergie thermique par bombardement d'électrons (un faisceau d'électrons produit une source de chaleur tridimensionnelle étroite et intense formant un trou ou un tunnel débouchant à travers les matériaux et se déplaçant le long du joint à souder, la machine et les pièces 1, 2 sont maintenues dans une enceinte sous vide) ou par laser (similaire à la précédente, le faisceau d'électrons est remplacé par un faisceau laser et le soudage n'est pas effectué sous vide).

Dans la suite de la description on prendra d'exemple préféré le cas d'une soudure à l'arc avec électrode non fusible (le métal étant préalablement déposé à la jonction desdites pièces 1, 2, en particulier sous la forme d'un anneau fusible), en particulier TIG.

Par ailleurs, de façon particulièrement préféré, le soudage est effectué en mode automatique orbital, c'est-à-dire avec la tête de soudage tournant autour des pièces 1, 2. Cela est par exemple permis par un dispositif 4 robotisé. Lorsque ce dernier est un TIG, on parle de soudage TAO.

*Physique des soudures*

Le présent procédé vise à ce que le cordon 3 satisfasse au moins un critère dimensionnel cible, avantageux chacun d'une pluralité de critères cibles. Ces critères dimensionnels portent sur des dimensions caractéristiques du cordon, et plus précisément sur des largeurs externes et/ou internes du cordon. Par « largeur » on entend la distance du bord de la pièce jusqu'à la limite de fusion de cette pièce.

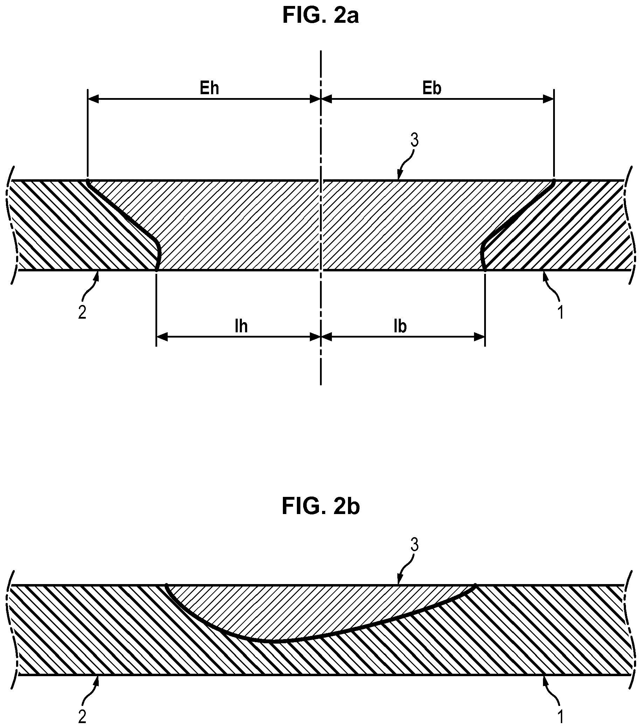

En référence à la **figure 2a,** sont représentées les quatre dimensions caractéristiques d'un cordon 3 :

- $Eh$ et $Eb$ représentent les largeurs haut/bas sur la face externe du cordon 3 ;
- $lh$ et $lb$ représentent les largeurs haut/bas sur la face interne du cordon 3.

Les notions de haut et bas font référence au haut et au bas lorsque les pièces sont disposées verticalement (la largeur « haut » désigne la distance entre le milieu de la jonction entre les pièces 1, 2 et le bord supérieur du cordon 3 sur la face, et l'épaisseur « bas » désigne la distance entre le milieu de la jonction entre les pièces 1, 2 et le bord inférieur du cordon 3 sur la face), mais elles pourront être utilisées indifféremment si les pièces 1, 2 sont horizontales (puisque la gravité travaille alors dans un plan orthogonale à la direction de décentrement du cordon 3).

Avantageusement au moins un critère dimensionnel relatif à une épaisseur interne sera pris en compte, plus avantageusement une épaisseur interne et une épaisseur externe, avantageusement les quatre critères.

La soudure est dite symétrique lorsque $Eh=Eb$ et $lh=lb.$ En pratique, les contraintes peuvent être respectées pour la partie externe (et donc pour les valeurs $Eh$ et $Eb$) tout en étant non-respectés pour la partie interne (valeurs de $lh$ et $lb$), ce qui donne l'apparence d'une soudure fiable.

En pratique, on constate qu'un problème peut survenir lors du soudage si l'effet de la tension superficielle du bain de fusion et l'effet de la convection naturelle sont mutuellement compensés, rendant le bain symétrique à la surface visible, alors que ce n'est pas le cas à la face interne (invisible) où une asymétrie s'installe due à un gradient thermique et chimique différents (il s'agit, parmi d'autres, de la teneur en impuretés de l'acier liquide). La **figure 2b** représente un exemple de cordon 3 défectueux présentant une mauvaise pénétration ($lh=lb=0$)

Les conditions de réalisation des soudures de joints de type Canopy sont complexes. Les pièces sont présentées verticalement, la gravité influe au premier ordre sur le déplacement du bain de fusion et donc sur le décentrement du cordon de soudure. On note également un grand nombre de paramètres influents :

- Liés à la source de chaleur: l'énergie linéaire du procédé, la puissance spécifique du procédé
- Liés à la pièce: l'épaisseur, la préparation des bords, le type de joint
- Liés au matériau: la composition chimique des pièces et/ou du métal d'apport (pas d'analyse chimique possible avant chaque réparation) et des propriétés thermo-physiques variables.

On sait aujourd'hui qu'il existe au moins deux phénomènes susceptibles d'engendrer le décentrement du bain de fusion : la convection naturelle et la tension de surface en présence d'inhomogénéité chimique. En effet, les deux forces sont prédominantes dans le bain et elles sont de même ordre de grandeur.

La force de la convection naturelle s'oppose à la gravité quand la densité du métal liquide diminue avec la température. Elle dirige l'écoulement dans le sens inverse de la gravité et peut, comme conséquence, induire le décentrement du bain.

La forme du bain de fusion est en grande partie déterminée par le profil de l'écoulement du métal dans le bain de fusion qui résulte en grande partie du phénomène de tension superficielle de la surface libre du bain métallique influencé par le gradient de température et le gradient de concentration de certaines espèces chimiques, dit effet Marangoni. Les conséquences possibles de cet effet sont :

- le manque de pénétration/fusion suite au décentrement du bain dû à la discontinuité de la teneur en impuretés ;
- des effondrements partiels du bain de fusion qui engendrent des 'défournis' ou des trous ;
- de fortes modifications de la largeur des cordons qui peuvent entraîner des manques de fusion.

Les matériaux à souder et le métal d'apport contiennent des espèces tensio-actives qui sont incorporées en tant qu'impuretés pendant la coulée de l'acier, par exemple le soufre. Par ailleurs, il est connu que la présence des espèces tensio-actives influe sur le comportement du bain de fusion en favorisant la pénétration du bain de fusion. Cependant la présence d'autres espèces qui entrent en réaction avec elles peut renforcer ou affaiblir cette tendance.

Si les pièces à souder ont une composition chimique initialement inhomogène - cas le plus fréquent en pratique -, cela peut provoquer le décentrement du bain de fusion dû à des phénomènes superficiels dirigeant l'écoulement vers les zones à faible teneur en impuretés.

Et ainsi, les inventeurs constatent que lors d'un soudage en position verticale (i.e. une pièce 1, 2 au-dessus de l'autre), la force de convection naturelle provoque un décentrement du bain de fusion en direction opposée à la gravité (vers le haut dans le cas du joint Canopy). Si la teneur en impuretés du carter (pièce 2 en haut) est plus élevée que la teneur en impuretés de l'adaptateur (pièce 1 en bas), configuration fréquente en pratique, l'effet Marangoni dû au gradient de la tension de surface peut compenser le décentrement sur la surface extérieure, par conséquent le bain restera symétrique, uniquement en surface extérieure. Sur la surface intérieure, où les températures sont beaucoup moins élevées, la convection naturelle sera dominante et donc la surface du bain métallique sera décentrée. En conclusion, le bain de fusion serait décentré sur la surface cachée (intérieure), alors qu'on pourrait voir le cordon symétrique à la surface extérieure. Le défaut de manque de fusion souvent rencontré lors des réparations est en particulier dû à ces effets.

Le présent procédé propose d'intégrer une méthode numérique couplée à l'analyse des pièces avant soudage de sorte à ajuster des paramètres opératoires de soudage afin d'assurer la fusion et la pénétration optimales des soudures dans la partie circonférentielle intérieure du cordon. Cela permet de satisfaire les contraintes dimensionnelles cibles, en particulier sur les largeurs internes $lh$ et/ou $lb$.

En d'autres termes, grâce à des traitements qui vont être à présent décrits, le présent procédé prend en compte les phénomènes physiques décrits ci-avant par le modèle de l'écoulement dans le bain de fusion, de sorte à prédire pour un jeu paramètres opératoires de soudage les paramètres dimensionnels du cordon qui seront obtenus. Cela permet d'ajuster les paramètres opérationnels jusqu'à garantir le respect de critères dits « cibles » prédéterminés sur ces paramètres dimensionnels (en l'espèce du respect de seuils minimaux désignés par les critères dimensionnels, préférentiellement des gammes de largeurs externe et/ou interne, typiquement de l'ordre de grandeur de la profondeur à souder - voir plus loin - soit des largeurs (haut + bas) de 1,5 mm à 2.5 mm), tels qu'un cordon vérifiant ces critères cibles est de bonne qualité, résistant à la pression, et solide.

En particulier, dans le mode de réalisation dans lequel les pièces s'étendent verticalement en prenant en compte quatre paramètres dimensionnels, les critères associés :

- des seuils maximaux pour $Eh$ et $lh$ ($Eh<a$ et $lh<c$) dans la mesure où la gravité a tendance à « écarter » la partie haute du cordon,
- des seuils minimaux pour $Eb$ et $lb$ ($Eb>b$ et $lb>d$) dans la mesure où la gravité à tendance à « ramener » la partie basse du cordon.

a est avantageusement légèrement supérieur à $b$ (par exemple de 10%) et similairement $c$ est avantageusement légèrement supérieur à $d$ (par exemple de 10%) de sorte à tendre vers un cordon symétrique.

On note que le sens de déplacement du cordon peut sembler intuitivement contradictoire par rapport à la gravité, mais il est connu qu'un effet de convection naturelle fait que le métal plus chaud remonte à cause d'un gradient thermique positif entre le centre du bain et l'extrémité haute du bain (dans le sens inverse à la gravité donc), ce qui fait qu'on a plus de chances de retrouver le cordon situé plus haut que prévu.

Par ailleurs, la largeur externe est généralement supérieure à la largeur interne, les critères sont donc en conséquence (par exemple a supérieur de 50% à 100% à *c*, idem pour *b* et *d*).

Alternativement, un ou plusieurs des critères peuvent être « absolus » et non relatifs, par exemple avoir la valeur la plus élevée possible (notamment pour *lh*).

*Procédé*

Dans une première partie comprenant quatre étapes, des moyens de traitement de données 11, typiquement un processeur d'un équipement 10 (un ordinateur) déterminent des valeurs optimales de paramètres opératoires de soudage. Comme l'on voit sur la figure 1b, l'équipement 10 comprend également typiquement des moyens de stockage de données 12 (une mémoire, par exemple un disque dur) et une interface homme machine 13 (par exemple un écran et un clavier), pour saisie des données et restitution des résultats.

De façon préférée, en particulier dans le cas de soudure à l'arc, les paramètres opératoires sont choisis parmi :

- une intensité *I* (en particulier entre de 50 A à 170 A) ;
- une tension *U* (en particulier entre de 5 V à 25 V) ;
- une vitesse de déplacement *v* de la tête du dispositif de soudage 4 (en particulier de 8 cm/min à 25 cm/min) ;
- un décentrement *h* de la tête par rapport à l'axe de la jonction (par exemple de -1 mm à +1 mm).

Dans la première étape (a), pour une configuration de soudage définie par l'épaisseur à souder, la position de soudage et les caractéristiques physico-chimiques des matériaux soudés, les moyens de traitement de données 11 identifient une pluralité de vecteurs de valeurs potentiellement acceptables des paramètres opératoires de soudage (typiquement des vecteurs $x_i = \{I, U, v, h\}$ si l'on considère les quatre paramètres ci-dessus) en fonction de caractéristiques physico-chimiques des pièces 1, 2 et/ou du métal d'apport. Il faut noter que les caractéristiques physico-chimiques des matériaux font partie des données d'entrée du modèle physique, à savoir la teneur en impuretés (S etc.) notamment de chaque pièce. Ces données permettent de calculer par le moyen du modèle le taux d'impuretés du mélange métallique dans le cordon de soudure résultant.

En d'autres termes, est déterminé un « domaine d'intérêt » au sein duquel un certain nombre de valeurs des paramètres opératoires sont susceptibles de produire un cordon de soudure satisfaisant les critères dimensionnels cibles. L'idée est d'obtenir une collection de vecteurs x variés permettant de balayer ce domaine d'intérêt. Il est à noter qu'il n'est absolument pas nécessaire que les vecteurs proposés (qui sont avant tout là pour constituer un échantillon d'apprentissage qui sera utilisé dans une étape ultérieure) permettent de satisfaire les critères dimensionnels cibles, il suffit juste qu'ils soient suffisamment variés pour qu'ils permettent à l'algorithme de considérer des fragments « sérieux » du domaine global tout en lui évitant de considérer d'autres fragments au sein desquels il est évident que les valeurs des paramètres opératoires de soudage ne permettront pas de satisfaire les critères dimensionnels cibles (valeurs aberrantes ou trop éloignées)

Lesdites caractéristiques physico-chimiques des pièces 1, 2 et/ou du métal d'apport sont avantageusement choisies parmi :

- leur teneur en impuretés (par exemple entre 0 et 300 ppm) et/ou en éléments spécifiques (en particulier le souffre) ;
- l'épaisseur à souder (i.e. l'épaisseur de la paroi des pièces 1, 2, en d'autres termes la distance entre la face externe et la face interne du cordon 3) ;
- la position de soudage : verticale, horizontale, etc. (Ce dernier est un cas à part, de façon préférée on pourra arbitrairement fixer que les pièces 1, 2 sont placées à la verticale, et ne conserver que les caractéristiques physico-chimiques précédentes).

Pour cela, l'étape (a) consiste notamment en la génération d'un plan d'expérience couvrant le domaine de variation des paramètres opératoires de façon uniforme, par exemple grâce à l'algorithme Latin Hypercube Sample.

Dans une seconde étape (b), les moyens de traitement de données 11 calculent, pour chaque vecteur $x_i$ identifié de valeurs de paramètres opératoires de soudage (en particulier $\{I, U, v, h\}$), un vecteur $y_i$ de valeurs théoriques de paramètres dimensionnels (en particulier $\{Eh, Eb, lh, lb\}$) du cordon de soudure 3. Pour cela, un modèle de simulation numérique est utilisé.

Ce modèle, par exemple implémenté dans Code_Saturne® permet de réaliser les simulations de fusion du métal et de formation du cordon 3. Il prend comme données d'entrée les caractéristiques physico-chimiques décrites précédemment et chaque vecteur $x_i$ des paramètres opératoires. Il calcule l'évolution des taux d'impuretés dans le bain au cours du soudage, la vitesse, la pression, la température, la fraction liquide du métal etc. en chaque point du bain. Il retourne en sortie du calcul la forme et les dimensions du bain de fusion à chaque instant de soudage. Les équations résolues dans le code correspondent notamment aux équations de magnétohydrodynamique incompressible avec le changement de phase solide/liquide et le modèle de tension de surface :

$$\text{div}\,(\rho\underline{u}) = 0,$$

$$\partial_t\,(\rho\underline{u}) + \text{div}\,(\rho\underline{u}\otimes\underline{u}) = -\underline{\text{grad}}\,p + \text{div}\left[\mu\left(\underline{\text{grad}}\,\underline{u} + {}^t\underline{\text{grad}}\,\underline{u}\right)\right] + \underline{j}\times\underline{B} + \underline{\mathcal{F}}_b + S_R^u,$$

$$\partial_t\,(\rho H) + \text{div}\,(\rho\underline{u}H) = \text{div}\left(\frac{\lambda}{C_p}\underline{\text{grad}}\,H\right) + \underline{j}\cdot\underline{E},$$

$$\text{div}\,(\sigma\underline{\text{grad}}\,P_R) = 0,\quad \text{div}\left(\underline{\text{grad}}\,\underline{A}\right) = -\mu_0\underline{j},$$

avec les conditions initiales et les conditions aux limites correspondantes. Pour la vitesse, ces conditions décrivent la force de tension de surface sur la face chauffée en fonction de la composition chimique:

$$\mu\frac{\partial\underline{u}}{\partial n} = f_l\cdot\left(-A - \Gamma_s R\left[\ln B + \frac{1-B}{B}\frac{\Delta H}{RT}\right]\right)\cdot\underline{\text{grad}}\,T,$$

$$B = 1 + k\,a_s e^{\left(\frac{-\Delta H}{RT} - C\right)}$$

et pour l'enthalpie :

$$\phi_{equiv}(r) + \phi_{radiative} + \phi_{convective} = \frac{\eta UI}{2\pi r_0^2}\exp\left(-\frac{r^2}{2r_0^2}\right) + \varepsilon\sigma(T^4 - T_0^4) + h(T - T_0)$$

A l'issue de l'étape (b), on dispose donc d'une collection de couples $(x_i\,;\,y_i)$ de vecteurs de paramètres opératoires/dimensionnels pour les conditions physico-chimiques d'entrée. Ces couples vont former un échantillon d'apprentissage.

En effet, dans une étape (c), les moyens de traitement de données 11 estiment par krigeage une fonction permettant d'exprimer le ou les paramètres dimensionnels du cordon de soudure 3 en fonction du ou des paramètres opératoires de soudage. En d'autres termes, le krigeage permet à partir des couples $(x_i\,;\,y_i)$ d'estimer la fonction $Y=f(X)$ appelée méta-modèle de krigeage.

Le krigeage est une méthode d'interpolation linéaire statistique garantissant une moyenne des erreurs nulle et le minimum de variance. En d'autres termes, la fonction $f$ estimée passe par tous les points $(x_i\,;\,y_i)$, i.e. $y_i = f(x_i)$. Des méthodes permettant d'obtenir un tel méta-modèle sont connues de l'homme du métier.

Dans une étape (d), les moyens de traitement de données 11 déterminent grâce au méta modèle des valeurs optimales du ou des paramètres opératoires de soudage.

Il s'agit des valeurs des paramètres opératoires pour lesquelles les valeurs correspondantes des paramètres dimensionnels du cordon de soudure 3 satisfont les critères dimensionnels cibles. En d'autres termes, il s'agit d'identifier $x_{opt}$ tel que $f(x_{opt})$ vérifie les critères, ou s'en approche le plus (en particulier pour un éventuel critère absolu).

Si un ensemble de vecteurs des paramètres opératoires permettent de vérifier les critères, l'optimal sera préférentiellement celui pour lequel le cordon est le plus symétrique possible (*Eh* tend vers *Eb* et *lh* tend vers *lb*)

A ce stade, on applique avantageusement un algorithme d'optimisation globale (par exemple EGO.nsteps) permettant de converger vers un optimum théorique.

Il est à noter que de façon récursive on peut réemployer le modèle numérique de sorte à calculer pour le vecteur $x_{opt}$ identifié comme potentiellement optimal des paramètres opératoires de soudage le vecteur $y_{opt}$ de valeurs théoriques de paramètres dimensionnels (qui n'est jamais parfaitement égal à $f(x_{opt})$ car f est une fonction estimée générant une erreur), ce qui permet de relancer les étapes (c) et (d) : le méta-modèle de krigeage $Y=f(X)$ est ainsi réévalué en tenant en compte du couple $(x_{opt}\,;\,y_{opt})$, ce qui l'affine, et un optimum « corrigé » peut être déterminé.

En d'autres termes, le procédé comprend suite à l'étape (d) une étape supplémentaire (d1) qui comprend le calcul pour le vecteur de valeurs déterminées optimales du ou des paramètres opératoires de soudage du vecteur associé de valeurs théoriques des paramètres dimensionnels du cordon de soudure 3 en fonction dudit modèle de bain de soudure ; et la répétition par les moyens de traitement de données 11 des étapes (c) et (d). Cette répétition des étapes (c) et (d) est de sorte à :

- ré-estimer par krigeage la fonction permettant d'exprimer le ou les paramètres dimensionnels du cordon de soudure 3 en fonction du ou des paramètres opératoires de soudage, en prenant en outre en compte le couple du vecteur de valeurs déterminées optimales du ou des paramètres opératoires de soudage et du vecteur associé de valeurs théoriques des paramètres dimensionnels du cordon de soudure 3 (il s'agit de l'étape (c) remise en oeuvre) ; et
- redéterminer des valeurs optimales du ou des paramètres opératoires de soudage en fonction de ladite fonction réestimée (il s'agit de l'étape (d) remise en oeuvre).

Il est à noter que la réévaluation du méta-modèle (étape (d1)) peut être soit faite un nombre de fois prédéterminé, soit tant que l'algorithme n'a pas permis de calculer un vecteur de paramètres opératoires satisfaisant. Dans ce cas, l'algorithme d'optimisation utilise comme optimum temporaire le vecteur permettant d'approcher au mieux les critères dimensionnels. Si après un certain nombre d'itérations il n'est toujours pas possible de trouver un vecteur permettant de satisfaire tous les critères dimensionnels cibles, alors il peut être défini que l'algorithme s'arrête et renvoie le meilleur vecteur identifié.

Dans une deuxième partie du procédé qui correspond à l'étape finale (e), est mis en oeuvre le soudage desdites pièces 1, 2 par le dispositif de soudage 4 configuré pour appliquer lesdites valeurs optimales du ou des paramètres opératoires de soudage déterminées.

Comme expliqué, le dispositif 4 est typiquement un dispositif de soudage à l'arc, notamment à électrode non fusible, en particulier de type tungstène (TIG).

Par configuration du dispositif de soudage 4, on entend seulement réglage en particulier de l'intensité $I$, de la tension $U$, de la vitesse de déplacement v de la tête du dispositif de soudage 4 et/ou de décentrement $h$ de la tête par rapport à l'axe de la jonction, sur la base de $x_{opt}=\{I, U, v, h\}$.

Cette étape peut consister en la restitution des valeurs optimales déterminées sur les moyens d'interface 13 en vue d'une saisie sur le dispositif 4. Alternativement, le dispositif 4 peut être connecté à l'équipement 10 pour configuration automatique.

Dans le cas du mode de réalisation préféré d'un soudage automatique orbital (TAO), le dispositif 4 peut être contrôlé par les moyens de traitement de données 11 pour une mise en oeuvre intégralement automatisée.

*Equipement et système*

Selon un deuxième aspect, l'invention concerne également l'équipement 10 pour la mise en oeuvre de la première partie du présent procédé.

Comme expliqué, l'équipement 10 est par exemple un poste de travail informatique, il comprend des moyens de traitement de données 11 (un processeur), et le cas échéant des moyens de stockage de données 12 (une mémoire) et une interface 13 (écran/clavier).

Les moyens de traitement de données 11 sont configurés pour mettre en oeuvre :

- Un module de détermination par d'une pluralité de vecteurs de valeurs potentiellement acceptables des paramètres opératoires de soudage en fonction de caractéristiques physico-chimiques de pièces 1, 2 en acier inoxydable et/ou du métal d'apport, les pièces 1, 2 étant à souder par fusion du métal d'apport à la jonction desdites pièces 1, 2 en un cordon de soudure 3 satisfaisant les critères dimensionnels cibles (il s'agit d'un module de définition du domaine d'intérêt) ;
- Un module de calcul, pour chacun desdits vecteurs, d'un vecteur de valeurs théoriques des paramètres dimensionnels du cordon de soudure 3 à la jonction desdites pièces 1, 2 en fonction d'un modèle de bain de fusion (il s'agit d'un module permettant de simuler pour chaque vecteur de paramètres opératoires de soudage le cordon obtenu, de sorte à générer la collection de points d'apprentissage) ;
- Un module d'estimation par krigeage d'une fonction permettant d'exprimer le ou les paramètres dimensionnels du cordon de soudure 3 en fonction du ou des paramètres opératoires de soudage (il s'agit d'un module permettant d'interpoler la fonction globale à partir de l'échantillon de points d'apprentissage) ;
- Un module de détermination de valeurs optimales du ou des paramètres opératoires de soudage pour lesquelles les valeurs estimées grâce à ladite fonction du ou des paramètres dimensionnelles du cordon de soudure 3 satisfont les critères dimensionnels cibles (il s'agit d'un module utilisant la fonction estimée pour déterminer les valeurs optimales des paramètres opératoires).

Les valeurs obtenues sont le cas échéant utilisées pour réaliser la soudure grâce à un dispositif de soudage 4 et produire le cordon 3 satisfaisant les critères dimensionnels cibles.

A ce titre, selon un troisième aspect est également proposé le système comprenant l'équipement 10 et le dispositif de soudage 4 présentant ledits paramètres opératoires de soudage réglables (par exemple via une interface de contrôle permettant la saisie des valeurs de ces paramètres opératoires).

Dans le mode de réalisation particulièrement préféré précédemment décrit, le dispositif de soudage 4 :

- comprend une tête de soudage équipée d'une électrode générant un arc électrique entre la tête et les pièces 1, 2 dans une atmosphère protectrice (il est en particulier de type TIG) ;
- est de type automatique orbital ;
- est connecté à l'équipement 10 (par exemple via une liaison filaire) ; et
- est configuré pour recevoir et appliquer lesdites valeurs optimales du ou des paramètres opératoires de soudage déterminées par les moyens de traitement de données 11.

Cela permet un fonctionnement entièrement automatisé réalisant des soudures parfaites aux paramètres dimensionnels garantis.

## Revendications

1. Procédé de soudage de pièces (1, 2) en acier inoxydable de sorte à réaliser par fusion d'un métal d'apport à la jonction desdites pièces (1, 2) un cordon de soudure (3) satisfaisant au moins un critère dimensionnel cible, **caractérisé en ce qu'**il comprend les étapes suivantes :

   (a) Détermination par des moyens de traitement de données (11) d'une pluralité de vecteurs de valeurs potentiellement acceptables d'au moins un paramètre opératoire de soudage en fonction de caractéristiques physico-chimiques des pièces (1, 2) et/ou du métal d'apport ;
   (b) Pour chacun desdits vecteurs, calcul par les moyens de traitement de données (11) d'un vecteur associé de valeurs théoriques d'au moins un paramètre dimensionnel du cordon de soudure (3) à la jonction desdites pièces (1, 2) en fonction d'un modèle de bain de fusion ;
   (c) Estimation par les moyens de traitement de données (11) par krigeage d'une fonction permettant d'exprimer le ou les paramètres dimensionnels du cordon de soudure (3) en fonction du ou des paramètres opératoires de soudage ;
   (d) Détermination par les moyens de traitement de données (11) de valeurs optimales du ou des paramètres opératoires de soudage pour lesquelles les valeurs estimées grâce à ladite fonction du ou des paramètres dimensionnelles du cordon de soudure (3) satisfont le ou les critères dimensionnels cibles ;
   (e) soudage desdites pièces (1, 2) par un dispositif de soudage (4) configuré pour appliquer lesdites valeurs optimales du ou des paramètres opératoires de soudage déterminées.

2. Procédé selon la revendication 1, dans lequel le dispositif de soudage (4) comprend une tête de soudage équipée d'une électrode générant un arc électrique entre la tête et les pièces (1, 2) dans une atmosphère protectrice.

3. Procédé selon la revendication 2, dans lequel l'électrode est en tungstène et ladite atmosphère protectrice est chimiquement inerte.

4. Procédé selon la revendication 3, dans lequel le métal d'apport est déposé à la jonction desdites pièces (1, 2) préalablement à la mise en oeuvre de l'étape (e).

5. Procédé selon la revendication 2, dans lequel l'électrode est fusible et forme le métal d'apport.

6. Procédé selon l'une des revendications 2 à 5, dans lequel le soudage de l'étape (e) est effectué en mode automatique orbital, c'est-à-dire avec la tête de soudage du dispositif (4) tournant autour des pièces (1, 2) à souder.

7. Procédé selon l'une des revendications 2 à 6, dans lequel ledit au moins un paramètre opératoire de soudage est choisi parmi :

   - Une intensité $I$ ;
   - Une tension $U$ ;

Ah

- une vitesse de déplacement *v* de la tête de soudage (4) ;
- un décentrement *h* de la tête de soudage par rapport à l'axe de la jonction desdites pièces (1, 2).

8. Procédé selon l'une des revendications 1 à 7, dans lequel les pièces (1, 2) présentent une face externe et une face interne, le cordon de soudure (3) étant fermé.

9. Procédé selon la revendication 8, dans lequel les pièces (1, 2) sont disposées verticalement l'une par rapport à l'autre, une caractéristique physico-chimique des pièces (1, 2) et/ou du métal d'apport étant représentative de cette disposition verticale.

10. Procédé selon la revendication 9, dans lequel ledit au moins un paramètre dimensionnel du cordon de soudure (3) est choisi parmi :

   - Une largeur haut *Eh* sur la face externe du cordon (3) ;
   - Une largeur bas *Eb* sur la face externe du cordon (3) ;
   - Une largeur haut *Ih* sur la face interne du cordon (3) ;
   - Une largeur bas *Ib* sur la face interne du cordon (3).

11. Procédé selon l'une des revendications 1 à 10, dans lequel au moins une caractéristique physico-chimique des pièces (1, 2) et/ou du métal d'apport est choisi parmi :

   - une teneur en impuretés des pièces (1, 2) et/ou du métal d'apport ;
   - une épaisseur à souder.

12. Procédé selon l'une des revendications 1 à 11, dans lequel l'analyse de l'étape (c) est mise en oeuvre sur la base des couples d'un vecteur de valeurs potentiellement acceptables du ou des paramètres opératoires de soudage et du vecteur associé de valeurs théoriques de ou des paramètres dimensionnels du cordon de soudure (3).

13. Procédé selon la revendication 1 à 12, comprenant suite à l'étape (d) :

   - pour le vecteur de valeurs déterminées optimales du ou des paramètres opératoires de soudage, le calcul par les moyens de traitement de données (11) du vecteur associé de valeurs théoriques du ou des paramètres dimensionnels du cordon de soudure (3) en fonction dudit modèle de bain de soudure ;
   - la répétition par les moyens de traitement de données (11) des étapes (c) et (d), de sorte à :

      ◦ ré-estimer par kriegeage la fonction permettant d'exprimer le ou les paramètres dimensionnels du cordon de soudure (3) en fonction du ou des paramètres opératoires de soudage, en prenant en outre en compte le couple du vecteur de valeurs déterminées optimales du ou des paramètres opératoires de soudage et du vecteur associé de valeurs théoriques du ou des paramètres dimensionnels du cordon de soudure (3) ; et
      ◦ redéterminer des valeurs optimales du ou des paramètres opératoires de soudage grâce à ladite fonction réestimée.

14. Equipement (10) comprenant des moyens de traitement de données (11) configurés pour mettre en oeuvre :

   - Un module de détermination d'une pluralité de vecteurs de valeurs potentiellement acceptables d'au moins un paramètre opératoire de soudage en fonction de caractéristiques physico-chimiques de pièces (1, 2) en acier inoxydable et/ou du métal d'apport, les pièces (1, 2) étant à souder par fusion du métal d'apport à la jonction desdites pièces (1, 2) en un cordon de soudure (3) satisfaisant au moins un critère dimensionnel cible ;
   - Un module de calcul, pour chacun desdits vecteurs, d'un vecteur de valeurs théoriques d'au moins un paramètre dimensionnel du cordon de soudure (3) à la jonction desdites pièces (1, 2) en fonction d'un modèle de bain de soudure ; **caractérisé en ce qu'**il comprend:

      - Un module d'estimation par analyse kriegeante d'une fonction permettant d'exprimer le ou les paramètres dimensionnels du cordon de soudure (3) en fonction du ou des paramètres opératoires de soudage ;
      - Un module de détermination de valeurs optimales du ou des paramètres opératoires de soudage pour lesquelles les valeurs estimées grâce à ladite fonction du ou des paramètres dimensionnelles du cordon de soudure (3) satisfont le ou les critères dimensionnels cibles.

**15.** Système de soudage comprenant un équipement selon la revendication 14 et un dispositif de soudage (4) présentant ledit au moins un paramètre opératoire de soudage réglable.

**16.** Système de soudage selon la revendication 15, dans lequel le dispositif de soudage (4) :

- comprend une tête de soudage équipée d'une électrode générant un arc électrique entre la tête et les pièces (1, 2) dans une atmosphère protectrice ;
- est de type automatique orbital ;
- est connecté à l'équipement (10) ;
- est configuré pour recevoir et appliquer lesdites valeurs optimales du ou des paramètres opératoires de soudage déterminées par les moyens de traitement de données (11).

**Patentansprüche**

**1.** Verfahren zum Schweißen von Teilen (1, 2) aus rostfreiem Stahl, um durch Fusion eines Zusatzmetalls an der Verbindung der Teile (1, 2) eine Schweißnaht (3) durchzuführen, die mindestens einem Ziel-Abmessungskriterium entspricht, **dadurch gekennzeichnet, dass** es die folgenden Schritte umfasst:

(a) Bestimmen, durch Datenverarbeitungsmittel (11), einer Vielzahl von Vektoren von potenziell annehmbaren Werten mindestens eines Schweiß-Betriebsparameters je nach den physisch-chemischen Eigenschaften der Teile (1, 2) und/oder des Zusatzmetalls;
(b) für jeden der Vektoren Berechnen, durch die Datenverarbeitungsmittel (11), eines assoziierten Vektors von theoretischen Werten mindestens eines Abmessungsparameters der Schweißnaht (3) an der Verbindung der Teile (1, 2) je nach einem Schmelzbadmodell;
(c) Schätzen, durch die Datenverarbeitungsmittel (11), durch Krigen, einer Funktion, die es ermöglicht, den oder die Abmessungsparameter der Schweißnaht (3) je nach dem oder den Schweiß-Betriebsparameter(n) zu exprimieren;
(d) Bestimmen, durch die Datenverarbeitungsmittel (11), von optimalen Werten des oder der Schweiß-Betriebsparameter, für die die Werte, geschätzt dank der Funktion des oder der Abmessungsparameter der Schweißnaht (3) dem oder den Ziel-Abmessungskriterien entsprechen;
(e) Schweißen der Teile (1, 2) durch eine Schweißvorrichtung (4), die konfiguriert ist, um die optimalen Werte des oder der bestimmten Schweiß-Betriebsparameter anzuwenden.

**2.** Verfahren nach Anspruch 1, wobei die Schweißvorrichtung (4) einen Schweißkopf umfasst, der mit einer Elektrode ausgestattet ist, die einen Lichtbogen zwischen dem Kopf und den Teilen (1, 2) in einer Schutzatmosphäre generiert.

**3.** Verfahren nach Anspruch 2, wobei die Elektrode aus Wolfram ist und die Schutzatmosphäre chemisch inert ist.

**4.** Verfahren nach Anspruch 3, wobei das Zusatzmetall an der Verbindung der Teile (1, 2) vor der Durchführung von Schritt (e) abgelegt wird.

**5.** Verfahren nach Anspruch 2, wobei die Elektrode schmelzbar ist und das Zusatzmetall bildet.

**6.** Verfahren nach einem der Ansprüche 2 bis 5, wobei die Schweißung von Schritt (e) auf orbitale automatische Weise durchgeführt wird, d. h. wobei sich der Schweißkopf der Vorrichtung (4) um zu schweißende Teile (1, 2) dreht.

**7.** Verfahren nach einem der Ansprüche 2 bis 6, wobei der mindestens eine Schweiß-Betriebsparameter ausgewählt ist aus:

- einer Intensität I;
- einer Spannung U;
- eine Verschiebungsgeschwindigkeit v des Schweißkopfs (4);
- einer Dezentrierung h des Schweißkopfs mit Bezug auf die Verbindungsachse der Teile (1, 2).

**8.** Verfahren nach einem der Ansprüche 1 bis 7, wobei die Teile (1, 2) eine äußere Seite und eine innere Seite darstellen, wobei die Schweißnaht (3) geschlossen ist.

**9.** Verfahren nach Anspruch 8, wobei die Teile (1, 2) vertikal mit Bezug aufeinander angeordnet sind, wobei eine physisch-chemische Eigenschaft der Teile (1, 2) und/oder des Zusatzsmetalls repräsentativ für diese vertikale Anordnung sind.

**10.** Verfahren nach Anspruch 9, wobei der oder mindestens ein Abmessungsparameter der Schweißnaht (3) ausgewählt ist aus:

- einer großen Breite *Eh* auf der äußeren Seite der Naht (3);
- einer geringen Breite *Eb* auf der äußeren Seite der Naht (3);
- einer großen Breite *Ih* auf der inneren Seite der Naht (3);

einer geringen Breite *Ib* auf der inneren Seite der Naht (3).

**11.** Verfahren nach einem der Ansprüche 1 bis 10, wobei mindestens eine physisch-chemische Eigenschaft der Teile (1, 2) und/oder des Zusatzmetalls ausgewählt ist aus:

- einem Gehalt an Verunreinigungen der Teile (1, 2) und/oder des Zusatzmetalls;
- einer zu schweißende Dicke.

**12.** Verfahren nach einem der Ansprüche 1 bis 11, wobei die Analyse von Schritt (c) auf der Grundlage der Kräftepaare eines Vektors potenzielle annehmbarer Werte des oder der Schweiß-Betriebsparameter und des assoziierten Vektors von theoretischen Werten des oder der Abmessungsparameter der Schweißnaht (3) durchgeführt wird.

**13.** Verfahren nach Anspruch 1 bis 12, umfassend nach Schritt (d):

- für den Vektor von optimalen bestimmten Werten des oder der Schweiß-Betriebsparameter Berechnen, durch die Datenverarbeitungsmittel (11), des assoziierten Vektors von theoretischen Werten des oder der Abmessungsparameter der Schweißnaht (3) je nach dem Schmelzbadmodell;
- Wiederholen, durch die Datenverarbeitungsmittel (11), der Schritte (c) und (d), um:

  - die Funktion durch Krigen erneut zu schätzen, das es ermöglicht, den oder die Abmessungsparameter der Schweißnaht (3) je nach dem oder den Schweiß-Betriebsparameter(n) zu exprimieren, indem außerdem das Kräftepaar der optimalen bestimmten Werte des oder der Schweiß-Betriebsparameter und des assoziierten Vektors von theoretischen Werten des oder der Abmessungsparameter der Schweißnaht (3) in Betracht gezogen werden; und
  - Neubestimmen der optimalen Werte des oder der Schweiß-Betriebsparameter dank der neugeschätzten Funktion.

**14.** Ausrüstung (10), umfassend Datenverarbeitungsmittel (11), die konfiguriert sind, um Folgendes durchzuführen:

- ein Modul zum Bestimmen einer Vielzahl von Vektoren von potenziell annehmbaren Werten mindestens eines Schweiß-Betriebsparameters je nach physisch-chemischen Eigenschaften von Teilen (1, 2) aus rostfreiem Stahl und/oder des Zusatzmetalls, wobei die Teile (1, 2), die durch Fusion des Zusatzmetalls an der Verbindung der Teile (1, 2) in einer Schweißnaht (3) zu schweißen sind, mindestens dem Ziel-Abmessungskriterium entsprechen;
- ein Modul zur Berechnung, durch jeden der Vektoren, eines Vektors von theoretischen Werten mindestens eines Abmessungsparameters der Schweißnaht (3) an der Verbindung der Teile (1, 2) je nach einem Schmelzbadmodell; **dadurch gekennzeichnet, dass** es Folgendes umfasst:

  - ein Modul zum Schätzen, durch Kriging-Analyse, einer Funktion, die es ermöglicht, den oder die Abmessungsparameter der Schweißnaht (3) je nach dem oder den Schweiß-Betriebsparameter(n) zu exprimieren;
  - ein Modul zum Bestimmen von optimalen Werten des oder der Schweiß-Betriebsparameter, für die die Werte, geschätzt dank der Funktion des oder der Abmessungsparameter der Schweißnaht (3) dem oder den Ziel-Abmessungskriterien entsprechen.

**15.** System zum Schweißen, umfassend eine Ausrüstung nach Anspruch 14 und eine Schweißvorrichtung (4), aufweisend den mindestens einen regulierbaren Schweiß- Betriebsparameter.

16. System zum Schweißen nach Anspruch 15, wobei die Schweißvorrichtung (4)

- einen Schweißkopf umfasst, der mit einer Elektrode ausgestattet ist, die einen Lichtbogen zwischen dem Kopf und den Teilen (1, 2) in einer Schutzatmosphäre generiert;
- vom orbitalen automatischen Typ ist:

- mit der Ausrüstung (10) verbunden ist;
- konfiguriert ist, um die optimalen Werte des oder der bestimmten Schweiß-Betriebsparameter zu empfangen und anzuwenden, die durch die Datenverarbeitungsmittel (11) bestimmt sind.

**Claims**

1. Method for welding stainless steel parts (1, 2) so as to produce by melting a filler metal at the junction of said parts (1, 2) a weld seam (3) satisfying at least one target dimensional criterion, **characterised in that** it comprises the following steps:

(a) Determining by data processing means (11) a plurality of potentially acceptable values of vectors of at least one welding operating parameter according to the physicochemical characteristics of the parts (1, 2) and/or of filler metal;
(b) For each one of said vectors, calculating by the data processing means (11) an associated vector of theoretical values of at least one dimensional parameter of the weld seam (3) at the junction of said parts (1, 2) according to a molten pool model;
(c) Estimating by the data processing means (11) by kriging a function allowing to express the dimensional parameter or parameters of the weld seam (3) as a function of the welding operating parameter or parameters;
(d) Determining by the data processing means (11) optimum values of the welding operating parameter or parameters for which the values estimated thanks to said function of the dimensional parameter or parameters of the weld seam (3) satisfy the target dimensional criterion or criteria;
(e) welding of said parts (1, 2) by a welding device (4) configured to apply said optimum values of the determined welding operating parameter or parameters.

2. Method according to claim 1, wherein the welding device (4) comprises a welding head provided with an electrode generating an electric arc between the head and the parts (1, 2) in a protective atmosphere.

3. Method according to claim 2, wherein the electrode is made of tungsten and said protective atmosphere is chemically inert.

4. Method according to claim 3, wherein the filler metal is deposited at the junction of said parts (1, 2) prior to the performing of the step (e).

5. Method according to claim 2, wherein the electrode is fusible and forms the filler metal.

6. Method according to one of claims 2 to 5, wherein the welding of the step (e) is carried out in automatic orbital mode, i.e. with the welding head of the device (4) rotating around the parts (1, 2) to be welded.

7. Method according to one of claims 2 to 6, wherein said at least one welding operating parameter is chosen from:

- An intensity $I$;
- A voltage $U$;
- a speed of displacement $v$ of the welding head (4) ;
- a decentring $h$ of the welding head with respect to the axis of the junction of said parts (1, 2).

8. Method according to one of claims 1 to 7, wherein the parts (1, 2) have an external face and an internal face, with the weld seam (3) being closed.

9. Method according to claim 8, wherein the parts (1, 2) are arranged vertically with respect to one another, a physicochemical characteristic of the parts (1, 2) and/or of the filler metal being representative of this vertical arrangement.

10. Method according to claim 9, wherein said at least one dimensional parameter of the weld seam (3) is chosen from:

    - A top width $Eh$ on the external face of the seam (3) ;
    - A bottom width $Eb$ on the external face of the seam (3);
    - A top width $Ih$ on the internal face of the seam (3) ;
    - A bottom width $Ib$ on the internal face of the seam (3).

11. Method according to one of claims 1 to 10, wherein at least one physicochemical characteristic of the parts (1, 2) and/or of the filler metal is chosen from:

    - a content in impurities of the parts (1, 2) and/or of the filler metal;
    - a thickness to be welded.

12. Method according to one of claims 1 to 11, wherein the analysis of the step (c) is implemented on the basis of pairs of a vector of potentially acceptable values of the welding operating parameter or parameters and of the associated vector of theoretical values of the dimensional parameter or parameters of the weld seam (3).

13. Method according to claim 1 to 12, comprising following the step (d):

    - for the vector of optimum determined values of the welding operating parameter or parameters, calculating by the data processing means (11) the associated vector of theoretical values of the dimensional parameter or parameters of the weld seam (3) according to said molten pool model;
    - repeating by the data processing means (11) the steps (c) and (d), so as to :

        -- re-estimate by kriging the function allowing to express the dimensional parameter or parameters of the weld seam (3) as a function of the welding operating parameter or parameters, by furthermore taking account of the pair of the vector of optimum determined values of the welding operating parameter or parameters and of the associated vector of theoretical values of the dimensional parameters of the weld seam (3); and
        -- re-determine the optimum values of the welding operating parameter or parameters thanks to said re-estimated function.

14. Equipment (10) comprising data processing means (11) configured to implement:

    - A module for determining a plurality of vectors of potentially acceptable values of at least one welding operating parameter according to the physicochemical characteristics of parts (1, 2) made of stainless steel and/or of the filler metal, the parts (1, 2) to be welded by melting of the filler metal at the junction of said parts (1, 2) into a weld seam (3) satisfying at least one target dimensional criterion;
    - A module for calculating, for each one of said vectors, a vector of theoretical values of at least one dimensional parameter of the weld seam (3) at the junction of said parts (1, 2) according to a molten pool model; **characterised in that** it comprises:

        - A module for estimating by kriging analysis a function allowing to express the dimensional parameter or parameters of the weld seam (3) as a function of the welding operating parameter or parameters;
        - A module for determining optimum values of the welding operating parameter or parameters for which the values estimated thanks to said function of the dimensional parameter or parameters of the weld seam (3) satisfy the target dimensional criterion or criteria.

15. Welding system comprising equipment according to claim 14 and a welding device (4) that has said at least one adjustable welding operating parameter.

16. Welding system according to claim 15, wherein the welding device (4):

    - comprises a welding head provided with an electrode generating an electric arc between the head and the parts (1, 2) in a protective atmosphere;
    - is of the automatic orbital type;
    - is connected to the equipment (10);
    - is configured to receive and apply said optimum values of the welding operating parameter or parameters determined by the data processing means (11).

## FIG. 1a

FIG. 1b

## FIG. 2a

## FIG. 2b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1419842 A

**Littérature non-brevet citée dans la description**

- A contribution to the solution of the inverse heat conduction problem in welding simulation. **ANDREAS PITTNER.** thèse de doctorat. BAM, 2012